# EUROPÄISCHE PATENTSCHRIFT

(11) **EP 1 966 504 B1**
(45) Veröffentlichungstag und Bekanntmachung des Hinweises auf die Patenterteilung: **04.11.2009**
(21) Anmeldenummer: 07703119.3
(22) Anmeldetag: 30.01.2007
(51) Int. Cl.: F16D 57/00, B60T 10/02, F16D 33/16

(54) **FÜLLUNGSSTEUERVORRICHTUNG FÜR EINE HYDRODYNAMISCHE MASCHINE**
FILLING CONTROL DEVICE FOR A HYDRODYNAMIC MACHINE
DISPOSITIF DE CONTROLE DU REMPLISSAGE D'UNE MACHINE HYDRODYNAMIQUE

(30) Priorität: 20.02.2006 DE 102006008110
(43) Veröffentlichungstag der Anmeldung: 10.09.2008
(73) Patentinhaber: Voith Turbo GmbH & Co. KG, 89522 Heidenheim (DE)
(72) Erfinder: LAUKEMANN, Dieter, 74541 Vellberg (DE)
(74) Vertreter: Dr. Weitzel & Partner
(86) Internationale Anmeldenummer: PCT/EP2007/000764
(87) Internationale Veröffentlichungsnummer: WO 2007/096043

(56) Entgegenhaltungen:
- DE-B- 1 134 903
- GB-A- 1 414 021
- GB-A- 2 052 658

## Beschreibung

Die Erfindung betrifft das Gebiet der hydrodynamischen Maschinen, und insbesondere eine Füllungssteuerungsvorrichtung einer hydrodynamischen Maschine, beziehungsweise eine hydrodynamische Maschine - beispielsweise einen Retarder - mit einer solchen Füllungssteuerungsvorrichtung.

Hydrodynamische Maschinen weisen einen Arbeitsraum auf, der mit einem Arbeitsmedium befüllbar ist, um Antriebsleistung beziehungsweise Drehmoment vom Primärrad der hydrodynamischen Maschine, auch Pumpenrad genannt, auf das Sekundärrad der hydrodynamischen Maschine, auch Turbinenrad genannt, zu übertragen. Bei einem hydrodynamischen Retarder ist das Turbinenrad stationär und wird daher auch Stator genannt.

Die vom Pumpenrad auf das Turbinenrad übertragene Antriebsleistung beziehungsweise das übertragene Moment ist abhängig vom Füllungsgrad des Arbeitsraums der hydrodynamischen Maschine, welcher durch die beiden Schaufelräder, Pumpenrad und Turbinenrad, ausgebildet wird. Insbesondere nimmt mit zunehmendem Füllungsgrad, beginnend in einem vollständig oder weitgehend entleerten Zustand (Leerlauf) bis zu einem vollgefüllten Zustand die übertragene Leistung beziehungsweise das übertragene Drehmoment zu. Über die Einstellung eines bestimmten Füllungsgrads des Arbeitsraums mit Arbeitsmedium kann somit die Leistungsübertragung der hydrodynamischen Maschine gesteuert werden.

Herkömmlich erfolgt die Steuerung der hydrodynamischen Maschine, beispielsweise eines Retarders, der beispielsweise als Wasserretarder ausgeführt ist, wie ihn die vorliegende Erfindung gemäß einer Ausführungsform betrifft, das heißt dessen Arbeitsmedium Wasser, beispielsweise aus dem Kühlwasserkreislauf eines Kraftfahrzeugs ist, über zwei getrennt voneinander angesteuerte Ventile. Das erste Ventil ist ein Schaltventil, beispielsweise ein 3/2-Wegeventil, welches nur die Zustände Ein und Aus aufweist. Der Arbeitsmediumstrom wird mittels dieses Schaltventils entweder vollständig zum Retarder oder an diesem vorbei, das heißt durch einen Bypass zu dem Retarder, geleitet. Das zweite Ventil ist ein Regelventil, welches in Strömungsrichtung des Arbeitsmediums gesehen hinter dem Arbeitsmediumauslass des Retarders vorgesehen ist und den Arbeitsmediumdruck im Arbeitsraum des Retarders und damit die übertragene Leistung und das übertragene Bremsmoment regelt.

Die bekannten Ausführungen erfordern somit zwei nebeneinander vorgesehene Ventile, welche jeweils mit einem Steuerdruck abgesteuert werden müssen. Ferner wird dadurch, dass das Schaltventil keine Zwischenstellungen aufweist und der Druck im Arbeitsraum der hydrodynamischen Maschine nur über eine sogenannte Auslassregelung mit dem Regelventil eingestellt wird, eine minimale Leistungsübertragung - beim Retarder ein minimales Bremsmoment - im geöffneten Zustand des Schaltventils vorgegeben, das außer durch Ausschaltung der hydrodynamischen Maschine nicht unterschritten werden kann. Der minimale Druck, der im Arbeitsraum durch das Auslassregelventil eingestellt wird und die minimale Leistung beziehungsweise das minimale Bremsmoment begründet, wird durch die Vorspannungskraft des Regelventils bestimmt, gegen welche dieses geöffnet werden muss..Diese Vorspannungskraft wird beispielsweise durch eine Druckfeder erzeugt, die den Ventilkolben in seine geschlossene Stellung drückt. Da mit dem Auslassregelventile auch hohe Drücke im Arbeitsraum geregelt werden müssen, beispielsweise um ein hohes Bremsmoment eines Retarders einzustellen, muss die Federkraft ausreichend groß sein, was gleichzeitig zu einer hohen Vorspannkraft und damit einem großen Minimaldruck im Arbeitsraum führt.

Das Dokument GB-A-2 052 658 beschreibt eine Ventilkombination mit drei Steuerventilen, mittels welcher sowohl das Bremsmoment eines Retarders als auch das Bremsmoment einer Reibbremse gesteuert wird. Die aus diesem Dokument bekannten Merkmale sind im Oberbegriff von Anspruch 1 zusammengefasst.

Der Erfindung liegt die Aufgabe zugrunde, eine Füllungssteuervorrichtung einer hydrodynamischen Maschine, insbesondere eines Retarders, anzugeben, deren Steuerungsaufwand gegenüber den Ausführungen gemäß dem Stand der Technik vermindert ist. Insbesondere soll die Füllungssteuervorrichtung mit einem einzigen Steuerventil auskommen und die Vorgabe einer hohen minimalen Leistungsübertragung, insbesondere eines minimalen Bremsmoments, nach dem Öffnen des Steuerventils vermeiden. Vorteilhaft soll das Bremsmoment beziehungsweise die vom Pumpenrad auf das Turbinenrad übertragene Leistung beginnend bei Null oder im wesentlichen bei Null gleichmäßig erhöhbar sein.

Die erfindungsgemäße Aufgabe wird durch eine Füllungssteuervorrichtung mit den Merkmalen von Anspruch 1 gelöst. Die abhängigen Ansprüche beschreiben vorteilhafte und besonders zweckmäßige Ausgestaltungen der Erfindung.

Die erfindungsgemäße Füllungssteuerungsvorrichtung weist einen ersten Einlass zum Zuführen von Arbeitsmedium für die hydrodynamische Maschine in die Füllungssteuerungsvorrichtung auf. Arbeitsmedium - beispielsweise Kühlwasser oder ein Kühlwassergemisch aus einem Kühlkreislauf, insbesondere Motorkühlkreislauf eines Kraftfahrzeugs - welches an diesem ersten Einlass anliegt, wird beim Öffnen der Füllungssteuerungsvorrichtung beziehungsweise des Steuerventils, welches diese ausbildet, in die hydrodynamische Maschine geleitet.

Die Füllungssteuerungsvorrichtung weist ferner einen zweiten Einlass auf, um Arbeitsmedium aus der hydrodynamischen Maschine in die Füllungssteuerungsvorrichtung zu leiten. An diesem zweiten Einlass steht somit das Arbeitsmedium an, welches die hydrodynamische Maschine über deren Arbeitsmediumauslass verlassen hat.

Die Füllungssteuerungsvorrichtung weist ferner wenigstens zwei Auslässe zum Abführen von Arbeitsmedium aus der Füllungssteuerungsvorrichtung auf. Der erste Auslass dient dem Abführen von Arbeitsmedium, welches über den ersten Einlass in die Füllungssteüerungsvorrichtung eingeleitet wurde, zu dem Arbeitsmediumeintritt der hydrodynamischen Maschine, um hierüber den Arbeitsraum der hydrodynamischen Maschine mit Arbeitsmedium zu befüllen oder befüllt zu halten. Der zweite Auslass der Füllungssteuerungsvorrichtung dient dem Abführen von Arbeitsmedium aus der hydrodynamischen Maschine, das heißt jenem Arbeitsmedium, welches über den zweiten Einlass in die Füllungssteuerungsvorrichtung geleitet wurde, oder von Arbeitsmedium aus einem Bypass zur hydrodynamischen Maschine, welcher dazu vorgesehen ist, um einen Teil des Arbeitsmediums aus dem ersten Einlass der Füllungssteuerungsvorrichtung oder das gesamte Arbeitsmedium aus dem ersten Einlass der Füllungssteuerungsvorrichtung an der hydrodynamischen Maschine vorbeizuleiten, letzteres bei einer hydrodynamischen Bremse im Nichtbremsbetrieb. Das Arbeitsmedium wird über den zweiten Auslass zurück in den externen Arbeitsmediumkreislauf geleitet, in welchem auch der erste Einlass mündet, beispielsweise dem Kühlwasser- beziehungsweise dem Kühlmittelkreislauf eines Kraftfahrzeugs.

Schließlich weist die erfindungsgemäße Füllungssteuerungsvorrichtung einen Kraftgeber oder Weggeber oder einen Anschluss für einen solchen auf, um die Arbeitsmediumströmung in den Ein- und Auslässen und/oder zwischen diesen mit einem Ventilkörper und/oder Kolben, wie er nachfolgend noch beschrieben wird, in Abhängigkeit der Steuerkraft oder des Steuerwegs zu steuern oder zu regeln. Beispielsweise kann ein Steuerdruckanschluss vorgesehen sein, zum Zuführen eines Steuerdruckes, mit welchem der Öffnungszustand des Steuerventils, das durch die Füllungssteuerungsvorrichtung ausgebildet wird, bestimmt wird. Insbesondere ist dieser Steuerdruckanschluss der einzige Steuerdruckanschluss, so dass jeglicher Öffnungszustand (oder Schließzustand) der Füllungssteuerungsvorrichtung über einen einzigen Steuerdruck geregelt beziehungsweise gesteuert wird.

Am Steuerdruckanschluss kann beispielsweise Druckluft aus einem Steuerluftsystem anliegen.

Alternativ oder zusätzlich kann der Ventilkörper oder Kolben über eine Zug- und/oder Druckstange, an der ein Stellantrieb oder dergleichen angreift, bewegt werden. Auch ein magnetischer Kraft- oder Weggeber innerhalb des Steuerventils oder angeschlossen daran kann vorgesehen sein. Andere Kraft- und/oder Weggeber sind möglich.

Erfindungsgemäß sind die beiden Einlässe und die beiden Auslässe in einem gemeinsamen Steuerventil vorgesehen, welches weinigstens einen Ventilkörper oder Kolben aufweist, der durch den Steuerdruck im Steuerdruckanschluss oder allgemein den Kraft- oder Weggeber derart beaufschlagt wird, dass er die Arbeitsmediumströmung in den Ein- und Auslässen und/oder zwischen diesen Ein- und Auslässen in Abhängigkeit des Steuerdruckes (oder der Steuerkraft beziehungsweise des Steuerwegs) wenigstens mittelbar steuert oder regelt. Der Ventilkörper oder Kolben kann beispielsweise, wie nachfolgend noch erläutert werden wird, die Strömungsquerschnitte von einzelnen Ein- und/oder Auslässen dadurch verändern, dass er in dem genannten Steuerventil verschoben wird, insbesondere in axialer Richtung des Steuerventils. Insbesondere verschließt der Kolben in Abhängigkeit seiner Stellung im Steuerventil den ersten Auslass vollständig, teilweise oder gibt diesen vollständig frei. In einer ersten Stellung kann der Kolben den Auslass beispielsweise vollständig verschließen, in einer zweiten Stellung vollständig freigeben, und in einer oder in einer Vielzahl von Zwischenstellungen teilweise verschließen.

Gemäß einer besonders vorteilhaften Ausgestaltung der Füllungssteuerungsvorrichtung weist das gemeinsame Steuerventil drei Einlässe und drei Auslässe auf, nämlich neben dem genannten ersten und zweiten Einlass und dem genannten ersten und zweiten Auslass einen dritten Auslass, der zu einem Bypass um die hydrodynamische Maschine herum führt, und einen dritten Einlass, in welchem dieser Bypass mündet. Vorteilhaft wird auch der freie Strömungsquerschnitt des dritten Auslasses durch die Stellung, insbesondere in Abhängigkeit der axialen Position des genannten ersten Kolbens, welcher auch als Hauptkolben bezeichnet werden könnte, bestimmt. Dieser Kolben kann den dritten Auslass wiederum in einer ersten Stellung vollständig freigeben, in einer zweiten Stellung vollständig verschließen und in einer oder einer Vielzahl von Zwischenstellungen teilweise freigeben. Alternativ oder zusätzlich kann dieser Kolben auch den dritten Einlass in Abhängigkeit seiner Position vollständig verschließen, vollständig freigeben oder teilweise verschließen. Entsprechend der Stellung des Kolbens wird somit Arbeitsmedium, welches dem ersten Einlass zugeführt wird, durch das Steuerventil hindurch entweder vollständig über den ersten Auslass in die hydrodynamische Maschine geleitet oder über den dritten Auslass vollständig in den Bypass geleitet, oder teilweise in den Bypass und teilweise in die hydrodynamische Maschine geleitet. Arbeitsmedium, welches aus dem Bypass oder der hydrodynamischen Maschine in die Füllungssteuerungsvorrichtung beziehungsweise deren Steuerventil strömt, wird vorteilhaft gemeinsam zu dem zweiten Auslass und aus diesem heraus geleitet.

Gemäß einer ersten Ausführung kann der Bypass durch eine an dem Steuerventil angeschlossene Rohrleitung, einen Schlauch oder eine andere separate Leitung ausgebildet sein. Gemäß einer zweiten Ausführungsform wird der Bypass durch die Füllungssteuerungsvorrichtung beziehungsweise das Steuerventil selbst gebildet, indem ein entsprechender Kanal in diesem vorgesehen ist, beispielsweise in dessen Gehäuse.

Das Steuerventil, welches insbesondere alleine die Füllungssteuerungsvorrichtung bildet, kann ein einziges Ventilgehäuse aufweisen, das jedoch aus mehreren Bauteilen zusammengesetzt sein kann. Gemäß einer vorteilhaften Ausführungsform weist das Ventilgehäuse einen sich in Axialrichtung erstreckenden Hohlkörper auf, der an seinen beiden Stirnseiten jeweils durch einen Deckel, einen Einsatz oder dergleichen verschlossen wird. Bei einer axialen Anordnung kann eine Stirnseite unmittelbar durch den Arbeitsmediumauslass der hydrodynamischen Maschine, insbesondere durch einen Retarderauslass, gebildet werden, so dass das Arbeitsmedium axial in den genannten Hohlkörper einströmt.

Innerhalb des Hohlkörpers kann der erste Kolben axial verschiebbar angeordnet sein, derart, dass er mit einer oder mehreren Steuerkanten abdichtend am Hohlkörper angreift, um so durch seine axiale Stellung die Strömung von Arbeitsmedium durch das Steuerventil zu bestimmen.

Gemäß einer vorteilhaften Ausführungsform sind innerhalb des Steuerventils wenigstens oder genau zwei Kolben, die man auch als Steuerkolben bezeichnen kann, vorgesehen, welche relativ zueinander verschiebbar sind, und welche die Strömung von Arbeitsmedium durch das Steuerventil durch ihre Stellung, insbesondere ihre axiale Position, im Steuerventil bestimmen. Der zweite Kolben kann beispielsweise verschiebbar im ersten Kolben gelagert sein. Beide Kolben sind vorteilhaft durch ein Federelement, beispielsweise eine Druckfeder, die in einer einfachen Form als Spiralfeder ausgebildet ist, jeweils einseitig beaufschlagt, um eine Vorspannung auf die Kolben auszuüben. Die Druckfeder, welche den zweiten Kolben vorspannt, kann sich beispielsweise mit einem axialen Ende an dem zweiten Kolben und mit ihrem anderen, entgegengesetzten axialen Ende an dem ersten Kolben abstützen.

Der zweite Kolben kann beispielsweise den Strömungsquerschnitt des zweiten Einlasses, durch welchen das Arbeitsmedium aus der hydrodynamischen Maschine strömt, unmittelbar steuern.

Vorteilhaft weist die Feder, mit welcher der zweite Kolben beaufschlagt ist, und die beispielsweise entgegen dem Druck des Arbeitsmediums im zweiten Einlass wirkt, und die sich zugleich am ersten Kolben abstützt, eine kleinere Federkraft als die erste Feder auf, welche den ersten Kolben entgegen der Kraft des Steuerdruckes im Steuerdruckanschluss (oder allgemein des Kraft- oder Weggebers) drücken kann.

Eine hydrodynamische Maschine, welche beispielsweise als Retarder, insbesondere als Wasserretarder, ausgebildet ist, kann zur Füllungssteuerung mit einer einzigen Füllungssteuerungsvorrichtung auskommen, wenn die Füllungssteuerungsvorrichtung erfindungsgemäß ausgebildet ist.

Die Erfindung soll nachfolgend anhand eines Ausführungsbeispiels und den Figuren exemplarisch erläutert werden.

Es zeigen:
- Figur 1: eine erfindungsgemäße Füllungssteuerungsvorrichtung, bestehend aus einem einzigen Steuerventil, in einer ersten Stellung, in welcher kein Arbeitsmedium zu der hydrodynamischen Maschine geleitet wird;
- Figur 2: die Füllungssteuerungsvorrichtung aus der Figur 1 in einer zweiten Stellung, in welcher ein Teil des der Füllungssteuerungsvorrichtung zugeführten Arbeitsmediums zu der hydrodynamischen Maschine geleitet wird;
- Figur 3: die Füllungssteuerungsvorrichtung der Figuren 1 und 2 in einer dritten Stellung, in welcher das gesamte der Füllungssteuerungsvorrichtung zugeleitete Arbeitsmedium der hydrodynamischen Maschine zugeführt wird.

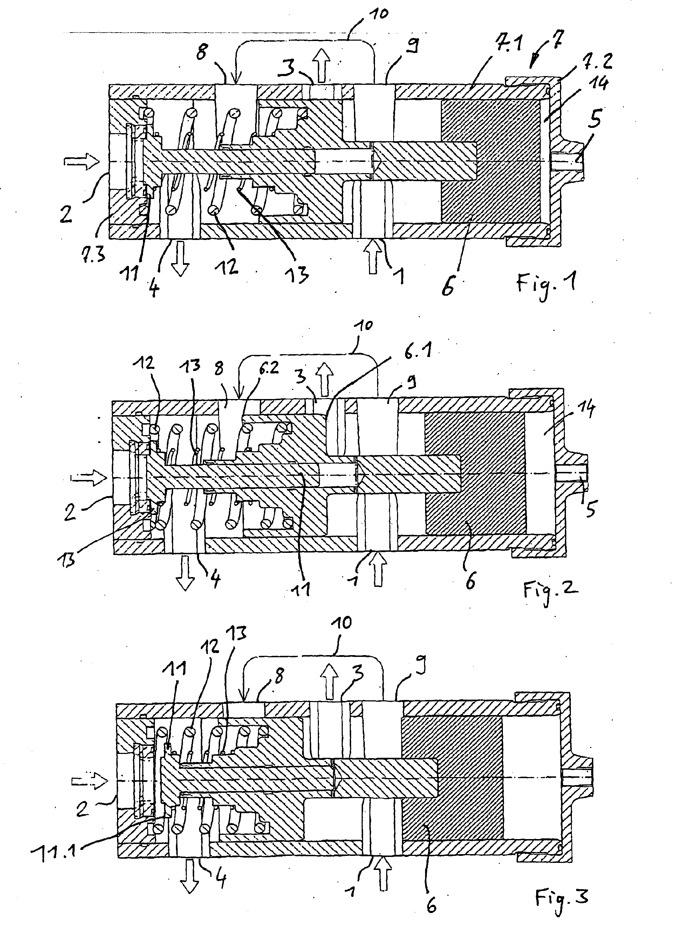

In der Figur 1 erkennt man eine erfindungsgemäß ausgeführte Füllungssteuerungsvorrichtung in Form eines Steuerventils mit einem einzigen Ventilgehäuse 7, das einen sich in Axialrichtung des Steuerventils erstreckenden Hohlkörper 7.1, der beispielsweise einen kreisrunden, rechteckigen oder quadratischen Querschnitt aufweisen kann, umfasst, wobei der Hohlkörper 7.1 an seinen beiden axialen Enden jeweils durch ein angeschlossenes Deckelelement verschlossen ist, wobei in der gezeigten Ausführungsform jedes Deckelelement einen strömungsleitenden Durchlass aufweist. Das erste Deckelelement (rechts in der Figur 1), welches vorliegend in Form einer Haube 7.2 von außen auf den Hohlkörper 7.1 aufgesetzt ist, weist den Steuerdruckanschluss 5 für das Steuerventil auf, wobei dieser Steuerdruckanschluss 5 der einzige Steuerdruckanschluss ist. Der Steuerdruckanschluss 5 kann beispielsweise an ein Steuerluftsystem angeschlossen sein, so dass die Stellung des Ventilkolbens 6, der innerhalb des Hohlkörpers 7.1 in Axialrichtung gleitet, sich in Abhängigkeit des Steuerdruckes im Steuerdruckanschluss 5 beziehungsweise in einem Steuerdruckraum 14, in welchem der Steuerdruckanschluss 5 mündet und der durch den Kolben 6 in Axialrichtung begrenzt wird, einstellt. Mit zunehmendem Steuerdruck im Steuerdruckraum 14 beziehungsweise dem Steuerdruckanschluss 5 wird durch axiale Verlagerung des Kolbens 6 entgegen der Kraft der Feder 12, welche als Spiraldruckfeder ausgeführt ist, die sich mit einem axialen Ende am Ventilgehäuse 7 abstützt und mit ihrem anderen, entgegengesetzten axialen Ende am Kolben 6, der Steuerdruckraum 14 vergrößert.

Wie dargelegt kann die Position des Kolbens 6 im Steuerventil auch durch einen anders gestalteten Kraft- und/oder Weggeber bestimmt werden. Beispielsweise kann der Kolben 6 an einer Kolbenstange angeschlossen sein, die zur Betätigung desselben aus dem Steuerventil herausragt und magnetisch, hydraulisch, mechanisch (beispielsweise über ein Gewinde) oder anderweitig angetrieben wird.

Das zweite axiale Ende (links in der Figur 1) des Hohlkörpers 7.1 wird durch einen Einsatz 7.3 verschlossen, welcher wiederum eine strömungsleitende Öffnung trägt. Diese strömungsleitende Öffnung ist der zweite Einlass 2, welcher mit Arbeitsmedium aus dem Arbeitsmediumauslass der hydrodynamischen Maschine (nicht dargestellt) beaufschlagt wird. Der Einsatz 7.3 kann beispielsweise Teil des Gehäuses der hydrodynamischen Maschine, insbesondere des Retardergehäuses, sein, welches den Arbeitsmediumauslass der hydrodynamischen Maschine ausbildet. In diesem Fall ist demnach die Füllungssteuerungsvorrichtung beziehungsweise das gezeigte Steuerventil axial am Arbeitsmediumauslass der hydrodynamischen Maschine angeschlossen. Wenn kein strömungsleitendes Element zwischengeschaltet ist, ist der zweite Einlass 2 zugleich der Arbeitsmediumauslass der hydrodynamischen Maschine, insbesondere des Retarders.

Bei der in Figur 1 gezeigten Ausführung stützt sich die Feder 12, welche den Kolben 6 vorspannt, an dem Einsatz 7.3 ab. Innerhalb des Kolbens 6, das heißt genauer innerhalb dessen Kolbenstange, ist ein zweiter Kolben 11, genauer mit seiner Kolbenstange, gleitend gelagert. Der zweite Kolben 11 ist wiederum durch ein Federelement, hier die Druckfeder 13, vorgespannt, und zwar in Richtung des zweiten Einlasses 2. Solange der Druck des Arbeitsmediums im zweiten Einlass 2 auf der Seite des Kolbens 11, die dem zweiten Einlass 2 zugewandt ist, geringer ist, als der Druck auf der dem zweiten Einlass 2 abgewandten Seite des Kolbens 11 (auf der Rückseite des Kolbentellers der den zweiten Einlass 2 verschließen kann), welcher durch den Arbeitsmediumdruck auf dieser Seite zusammen mit dem Federdruck der Feder 13 ausgebildet wird, verschließt der zweite Kolben 11 den zweiten Einlass 2 vollständig, so dass kein Arbeitsmedium in den zweiten Einlass 2 einströmen und von dort zu dem zweiten Auslass 4 ausströmen kann. Diese Stellung ist in der Figur 1 gezeigt. Wie man sieht wirkt auch der Druck auf die Kolbenstangenfläche des zweiten Kolbens 11, welche vom zweiten Einlass 2 abgewendet ist und innerhalb einer Blindbohrung im ersten Kolben 6 gleitet, zusammen mit der Federkraft der Feder 13 und dem beschriebenen Druck auf der Rückseite des Kolbentellers entgegen dem Druck im zweiten Einlass 2. Dieser Druck in der Blindbohrung, welcher auf die Kolbenstangenfläche wirkt, wird durch den Druck im ersten Einlass 1 und dritten Auslass 9 bestimmt, welche über Radialbohrungen in der Kolbenstange des ersten Kolbens 6 mit der Blindbohrung verbunden sind.

In der Figur 1 erkennt man ferner den ersten Einlass 1, über welchen Arbeitsmedium aus dem externen Arbeitsmediumkreislauf in das Steuerventil einströmt, und von dort weiter zu dem dritten Auslass 9 in einen Bypass 10, der die hydrodynamische Maschine umgeht. Aus dem Bypass 10 strömt das Arbeitsmedium wieder zurück in das Steuerventil, und zwar über den dritten Einlass 8. Sämtliches Arbeitsmedium, welches über den ersten Einlass 1 in das Steuerventil eingeströmt ist, strömt somit bei der in der Figur 1 gezeigten Stellung der Kolben 6 und 11 auch über den dritten Einlass 8 in das Steuerventil. Vom dritten Einlass 8 strömt das Arbeitsmedium dann zu dem zweiten Auslass 4 und über diesen zurück in den externen Arbeitsmediumkreislauf. Das Arbeitsmedium kann demnach in der gezeigten Stellung im externen Arbeitsmediumkreislauf zirkulieren, ohne dass es durch die hydrodynamische Maschine strömt. Die gezeigte Steuerstellung des Steuerventils wird daher auch als Leerlaufstellung bezeichnet.

Wie man aus der Figur 1 leicht erkennen kann, wird sich die gezeigte Leerlaufstellung immer dann einstellen, wenn der Steuerdruck im Steuerdruckanschluss 5 beziehungsweise im Steuerdruckraum 14 gering oder drucklos ist. Somit überwiegt die Kraft der Feder 12, welche den Kolben 6 in seine erste axiale Endstellung drückt, in welcher er den dritten Auslass 9 und den dritten Einlass 8 vollständig freigibt, so dass sämtliches Arbeitsmedium, welches in das Steuerventil einströmt, hier über den ersten, stets vollständig geöffneten Einlass 1, ungehindert durch den Bypass 10 strömen kann und über den ersten Auslass 4, welcher ebenfalls stets vollständig geöffnet ist, wieder aus dem Steuerventil heraus.

Da kein Arbeitsmedium über den ersten Auslass 3, welcher durch den ersten Kolben 6 in der Leerlaufstellung vollständig verschlossen wird, in die hydrodynamische Maschine strömen kann, ist der Druck am zweiten Einlass 2 gering, so dass die Feder 13 beziehungsweise der Druck des Arbeitsmediums im dritten Einlass 8 und dem zweiten Auslass 4, mit welchem der zweite Kolben 11 auf seiner dem zweiten Einlass 2 abgewandten Seite beaufschlagt wird, überwiegt und der zweite Kolben 11 abdichtend gegen den Einsatz 7.3 gedrückt wird. Somit ist es möglich, den Arbeitsmediumauslass der hydrodynamischen Maschine im ausgeschalteten Zustand (Leerlaufzustand) nach der Art eines Rückschlagventils sicher zu verschließen. Durch das axiale Verschließen des Arbeitsmediumauslasses der hydrodynamischen Maschine kann eine so dichte Abdichtung erzeugt werden, dass auch ein Unterdruck im Arbeitsraum der hydrodynamischen Maschine im ausgeschalteten Zustand möglich ist.

Die Figur 2 zeigt eine zweite Stellung des Steuerventils beziehungsweise von dessen Kolben 6 und 11, bei welchem der Steuerdruck im Steuerdruckanschluss 5 beziehungsweise in dem Steuerdruckraum 14 gegenüber dem in der Figur 1 gezeigten Zustand soweit erhöht worden ist, dass sich der erste Kolben 6 entgegen der Kraft der Feder 12 aus seiner ersten axialen Endstellung in Richtung des zweiten Einlasses 2 beziehungsweise in Richtung seiner zweiten axialen Endstellung - aber nicht vollständig in diese - bewegt hat und den ersten Auslass 3, über welchen Arbeitsmedium in die hydrodynamische Maschine geführt wird, teilweise freigegeben hat. Zugleich verschließt der erste Kolben 6 in der gezeigten Zwischenstellung der Figur 2 den dritten Einlass 8 teilweise, so dass insbesondere der Strömungsdruck im Bypass 10 erhöht wird. Ein Teil des Arbeitsmediums, welches über den ersten Einlass 1 in das Steuerventil strömt, strömt somit über den ersten Auslass 3 in die hydrodynamische Maschine, und der Rest dieses Arbeitsmediums strömt weiterhin über den Bypass 10 in den dritten Einlass 8 und von dort zu dem zweiten Auslass 4 zurück in den externen Arbeitsmediumkreislauf. Die Aufteilung des Arbeitsmediumstromes aus dem ersten Einlass 1 auf den Bypass 10 und die hydrodynamische Maschine wird durch die Größe des Steuerdruckes und die Federkraft der Feder 12 bestimmt.

Der zweite Kolben 11 wird entgegen der Kraft der Feder 13 von dem Einsatz 7.3 abgehoben und gibt den zweiten Einlass 2 frei, so dass das Arbeitsmedium aus der hydrodynamischen Maschine bei einem nur geringen Druck im Arbeitsraum der hydrodynamischen Maschine über den zweiten Einlass 2 und den zweiten Auslass 4 in den externen Arbeitsmediumkreislauf strömen kann. Bei einem hydrodynamischen Retarder lassen sich somit kleine Bremsmomente einstellen, die unterhalb jener Bremsmomente liegen, die bisher bei Retardern mit einem Schaltventil am Einlass, welches nur eine Auf- und eine Zustellung kannte, kombiniert mit einem Regelventil am Auslass erreicht wurden.

Wenn nun der Steuerdruck weiter erhöht wird, stellt sich die in der Figur 3 gezeigte zweite axiale Endstellung des ersten Kolbens 6 ein. In dieser Stellung gibt der Kolben 6 den ersten Auslass 3 zur hydrodynamischen Maschine vollständig frei und verschließt zugleich den dritten Einlass 8 vollständig, so dass kein Arbeitsmedium mehr durch den Bypass 10 strömen kann, obwohl der dritte Auslass 9 stets vollständig geöffnet ist. Sämtliches Arbeitsmedium aus dem ersten Einlass 2 strömt somit durch den ersten Auslass 3, die hydrodynamische Maschine, durch den zweiten Einlass 2 zum zweiten Auslass 4 und weiter in den externen Arbeitsmediumkreislauf. Der zweite Kolben 11 stößt bündig am ersten Kolben 6 an, und der Druck am Arbeitsmediumauslass der hydrodynamischen Maschine beziehungsweise am zweiten Einlass 2 stellt sich im Verhältnis der Flächen am zweiten Kolben 11 und am ersten Kolben 6, reduziert um die Kraft der Feder 12, ein. Die verhältnismäßig "weiche" Feder 13 spielt keine Rolle mehr. Hierdurch lassen sich nun auch deutlich höhere Drücke im Arbeitsraum der hydrodynamischen Maschine einstellen, mit einem Retarder somit deutlich größere Bremsmomente erzeugen.

Insbesondere ist es die einzige Aufgabe der zweiten Feder 13, dafür zu sorgen, dass im ausgeschalteten Zustand der hydrodynamischen Maschine deren Arbeitsmediumauslass beziehungsweise der zweite Einlass 2 vollständig verschlossen ist.

In der gezeigten Ausführung weist der erste Kolben 6 zwei Steuerkanten 6.1 und 6.2 auf, welche jeweils mit der Innenfläche des Hohlkörpers 7.1 zusammenwirken. Mit der ersten Steuerkante 6.1 wird der Strömungsquerschnitt im ersten Auslass 3 gesteuert, und mit der zweiten Steuerkante 6.2 wird der Strömungsquerschnitt im dritten Einlass 8 gesteuert.

Der zweite Kolben 11 weist eine Steuerkante 11.1 auf, welche wiederum mit dem Ventilgehäuse 7, hier dem stirnseitigen Einsatz 7.3, zusammenarbeitet. Mit der Steuerkante 11.1 des zweiten Kolbens 11 wird der Strömungsquerschnitt des zweiten Einlasses 2 gesteuert.

Die Füllungssteuerung einer hydrodynamischen Maschine kann gemäß der gezeigten Ausführungsform einer erfindungsgemäßen Füllungssteuerungsvorrichtung alleine durch ein Steuerventil mit einem einzigen Ventilgehäuse 7, umfassend sieben Anschlüsse, und zwei in dem Ventilgehäuse 7 axial verschiebbare Kolben, die jeweils durch eine Druckfeder 12, 13 vorgespannt werden, erfolgen. Wenn der Bypass 10 vollständig durch das Steuerventil gebildet wird, insbesondere innerhalb des Ventilgehäuses 7 verläuft, kann das Ventilgehäuse 7 sogar mit nur fünf Anschlüssen auskommen.

Der Druckaufbau im Steuerdruckanschluss 5 beziehungsweise im Steuerdruckraum 14 kann zum Einleiten einer Leistungsübertragung in der hydrodynamischen Maschine, zum Beispiel einer Bremsung mit einem Retarder, allmählich beispielsweise in Form einer Rampe erhöht werden. Somit kann ein Retarder sanft zugeschaltet werden. Durch diese Art der Zuschaltung können Druckschwankungen aufgrund von Volumenstromänderungen vermieden beziehungsweise auf ein Minimum reduziert werden. Solche Volumenstromänderungen ergaben sich bisher dadurch, dass sich durch Schalten des Schaltventils am Einlass des Retarders der Strömungswiderstand im System schlagartig geändert hat.

Beim Ausschalten der hydrodynamischen Maschine, insbesondere des Retarders, kann der Druck wiederum nicht schlagartig, sondern entsprechend einer Vorgabe, beispielsweise gleichmäßig in Form einer Rampe, abgebaut werden. Bei einer Notabschaltung, beispielsweise aufgrund einer ABS-Anforderung, kann zugunsten eines schnelleren Ausschaltens auf die Abschaltrampe verzichtet werden.

## Patentansprüche

1. Füllungssteuerungsvorrichtung einer hydrodynamischen Maschine, insbesondere für einen Retarder,
1.1 mit einem ersten Einlass (1) zum Zuführen von Arbeitsmedium für die hydrodynamische Maschine in die Füllungssteuerungsvorrichtung;
1.2 mit einem zweiten Einlass (2) zum Zuführen von Arbeitsmedium aus der hydrodynamischen Maschine in die Füllungssteuerungsvorrichtung;
1.3 mit einem ersten Auslass (3) zum Abführen von Arbeitsmedium in die hydrodynamische Maschine;
1.4 mit einem zweiten Auslass (4) zum Abführen von Arbeitsmedium aus der hydrodynamischen Maschine oder von Arbeitsmedium aus einem Bypass (10), der Arbeitsmedium an der hydrodynamischen Maschine vorbei leitet; .
1.5 mit einem Kraft- und/oder Weggeber oder einem Anschluss für einen solchen, wobei
1.6 alle genannten Ein- und Auslässe (1, 2, 3, 4) zusammen mit dem Kraft- und/oder Weggeber oder dem Anschluss für einen solchen in einem gemeinsamen Steuerventil vorgesehen sind, welches einen ersten Ventilkörper oder Kolben (6) aufweist, der durch den Kraft- und/oder Weggeber derart beaufschlagt wird, dass er die Arbeitsmediumströmung in den Ein- und Auslässen (1, 2, 3, 4) und/oder zwischen diesen in Abhängigkeit der Beaufschlagung durch den Kraft- und/oder Weggeber wenigstens mittelbar steuert oder regelt; **gekennzeichnet durch** die folgenden Merkmale:
1.7 ein dritter Einlass (8) zum Zuführen von Arbeitsmedium aus dem Bypass (10) in die Füllungssteuerungsvorrichtung und ein dritter Auslass (9) zum Abführen von Arbeitsmedium in den Bypass (10) sind vorgesehen, welche derart mit dem ersten Ventilkörper oder Kolben (6) verbunden sind, dass dieser die Arbeitsmediumströmung in dem dritten Einlass (8) und dem dritten Auslass (9) und/oder zwischen diesen in Abhängigkeit der Beaufschlagung **durch** den Kraft- und/oder Weggeber steuert oder regelt.

2. Füllungssteuerungsvorrichtung gemäß Anspruch 1, **dadurch gekennzeichnet, dass** der Ventilkörper oder Kolben (6) durch Beaufschlagen durch den Kraft- und/oder Weggeber derart betätigbar ist, insbesondere in Abhängigkeit eines Steuerdrucks, dass er die Aufteilung des Arbeitsmediumstromes aus dem ersten Einlass (1) auf den Bypass (10) und die hydrodynamische Maschine steuert oder regelt.

3. Füllungssteuervorrichtung gemäß einem der Ansprüche 1 oder 2, **dadurch gekennzeichnet, dass** als Weggeber für den ersten Ventilkörper oder Kolben (6) ein Steuerdruckanschluss (5) mit einem einstellbaren Steuerdruck in dem Steuerventil vorgesehen ist, und der erste Ventilkörper oder Kolben (6) derart durch den Steuerdruck beaufschlagt wird, dass er die Arbeitsmediumströmung in den Ein- und Auslässen (1, 2, 3, 4) und/oder zwischen diesen in Abhängigkeit des Steuerdruckes wenigstens mittelbar steuert oder regelt.

4. Füllungssteuerungsvorrichtung gemäß einem der Ansprüche 1 bis 3,
**dadurch gekennzeichnet, dass** das Steuerventil ein einziges Ventilgehäuse (7), insbesondere bestehend aus einem Hohlkörper (7.1) und zwei endseitig angeordneten Deckelelementen, aufweist, in welchem die Ein- und Auslässe (1, 2, 3, 4) und insbesondere der Steuerdruckanschluss (5) getrennt voneinander münden.

5. Füllungssteuerungsvorrichtung gemäß einem der Ansprüche 1 bis 4,
**dadurch gekennzeichnet, dass** der Bypass (10) durch die Füllungssteuerungsvorrichtung selbst gebildet wird.

6. Füllungssteuerungsvorrichtung gemäß einem der Ansprüche 1 bis 5,
**dadurch gekennzeichnet, dass** ein zweiter Ventilkörper oder Kolben (11) vorgesehen ist, welcher relativ zu dem ersten Ventilkörper oder Kolben (6), insbesondere koaxial oder fluchtend mit diesem, verschiebbar ist.

7. Füllungssteuerungsvorrichtung gemäß Anspruch 6, **dadurch gekennzeichnet, dass** der zweite Kolben (11) gleitend in dem ersten Kolben (6) gelagert ist, und sich insbesondere über eine Feder (13), insbesondere Druckfeder, am ersten Kolben (6) abstützt.

8. Füllungssteuerungsvorrichtung gemäß einem der Ansprüche 6 oder 7,
**dadurch gekennzeichnet, dass** der erste Kolben (6) eine Steuerkante (6.1) aufweist, die insbesondere zusammen mit dem Ventilgehäuse (7) den Öffnungsquerschnitt des ersten Auslasses (3) steuert, und der zweite Kolben (11) eine Steuerkante (11.1) aufweist, die insbesondere zusammen mit dem Ventilgehäuse (7) den Öffnungsquerschnitt des zweiten Einlasses (2) steuert.

9. Füllungssteuerungsvorrichtung gemäß einem der Ansprüche 1 bis 8,
**dadurch gekennzeichnet, dass** der erste Kolben (6) und insbesondere der zweite Kolben (11) durch jeweils eine Feder (12, 13), insbesondere Druckfeder, vorgespannt sind.

10. Füllungssteuerungsvorrichtung gemäß Anspruch 9, **dadurch gekennzeichnet, dass** die Feder (13), welche den zweiten Kolben (11) vorspannt, eine kleinere Federkraft als die Feder (12) aufweist, welche den ersten Kolben (6) vorspannt.

11. Füllungssteuerungsvorrichtung gemäß einem der Ansprüche 6 bis 10,
**dadurch gekennzeichnet, dass** der erste Kolben (6) insbesondere zusammen mit dem Ventilgehäuse (7) den Öffnungsquerschnitt des ersten Auslasses (3) und den Öffnungsquerschnitt des dritten Einlasses (8) steuert, und der zweite Kolben (11) insbesondere zusammen mit dem Ventilgehäuse (7) den Öffnungsquerschnitt des zweiten Einlasses (2) steuert, und der erste Einlass (1), der zweite Auslass (4) und der dritte Auslass (9) insbesondere einen konstanten, stets voll geöffneten Querschnitt aufweisen.

12. Füllungssteuerungsvorrichtung gemäß den Ansprüchen 4 und 6 und insbesondere gemäß Anspruch 5 oder einem der Ansprüche 7 bis 11,
**dadurch gekennzeichnet, dass** die Füllungssteuerungsvorrichtung bis auf die genannten Ein- und Auslässe (1, 2, 3, 4, 8, 9) und insbesondere den Steuerdruckanschluss (5) frei von arbeits- oder steuermediumleitenden Anschlüssen ist.

13. Füllungssteuerungsvorrichtung gemäß einem der Ansprüche 6 bis 12,
**dadurch gekennzeichnet, dass** die Füllungssteuerungsvorrichung bis auf die beiden Kolben (6, 11) frei von beweglichen Steuerkolben ist.

14. Füllungssteuerungsvorrichtung gemäß einem der Ansprüche 6 bis 13,
**dadurch gekennzeichnet, dass** der erste Kolben (6) auf einer ersten Seite durch den Steuerdruck oder den Kraft- oder Weggeber beaufschlagt wird, und auf einer zweiten, zu der ersten Seite entgegengesetzten Seite durch den Druck aus dem zweiten Einlass (2) und/oder dem dritten Einlass (8), wobei der Steuerdruck oder der Kraft- oder Weggeber insbesondere entgegen der Kraft der Feder (12), welche den ersten Kolben (6) vorspannt, wirkt.

15. Füllungssteuerungsvorrichtung gemäß einem der Ansprüche 6 bis 14,
**dadurch gekennzeichnet, dass** der zweite Kolben (11) auf einer ersten Seite durch den Druck im ersten Auslass (3) und/oder im dritten Auslass (9) beaufschlagt wird, und auf einer zweiten, zu der ersten Seite entgegengesetzten Seite durch den Druck aus dem zweiten Einlass (2) und/oder dem dritten Einlass (8), wobei der Druck auf der zweiten Seite insbesondere entgegen der Kraft der Feder (13), welche den zweiten Kolben (11) vorspannt, wirkt.

16. Füllungssteuerungsvorrichtung gemäß einem der Ansprüche 1 bis 15,
**dadurch gekennzeichnet, dass** der oder die Kolben (6, 11) in Axialrichtung in dem Steuerventil verschiebbar sind, und der zweite Einlass (2) axial in dem Steuerventil mündet.

17. Füllungssteuerungsvorrichtung gemäß einem der Ansprüche 1 bis 16,
**dadurch gekennzeichnet, dass** eine Steuervorrichtung zum Einstellen des Steuerdruckes am Steuerdruckanschluss (5) oder ein Kraft- und/oder Weggeber vorgesehen ist, welche(r) derart eingerichtet ist, dass sie/er zum Öffnen des Steuerventils, um Arbeitsmedium von dem ersten Einlass (1) zum ersten Auslass (3) zu leiten, den Steuerdruck oder die Stellgröße des Kraft- und/oder Weggebers allmählich erhöht, und zum Schließen des Steuerventils, um die Arbeitsmediumleitung aus dem ersten Auslass (3) heraus zu stoppen, den Steuerdruck oder die Stellgröße allmählich verringert.

18. Füllungssteuerungsvorrichtung gemäß Anspruch 17, **dadurch gekennzeichnet, dass** die Steuervorrichtung oder der Kraft- und/oder Weggeber einen ersten Betriebsmodus, Standardmodus, aufweist, in welchem der Steuerdruck oder die Stellgröße gemäß dem Anspruch 16 eingestellt wird, und einen zweiten Betriebsmodus, Notabschaltungsmodus, in welchem der Steuerdruck oder die Stellgröße sprungartig, insbesondere unmittelbar vollständig, abgeschaltet oder verringert wird.

19. Hydrodynamische Maschine, insbesondere Retarder, mit einem Arbeitsmediumeinlass und einem Arbeitsmediumauslass, **dadurch gekennzeichnet, dass** die hydrodynamische Maschine mit einer Füllungssteuerungsvorrichtung gemäß einem der Ansprüche 1 bis 18 versehen ist, und der Arbeitsmediumeinlass arbeitsmediumleitend mit dem ersten Auslass (3) verbunden ist, und der Arbeitsmediumauslass arbeitsmediumleitend mit dem zweiten Einlass (2) verbunden ist.

20. Hydrodynamische Maschine gemäß Anspruch 19, **dadurch gekennzeichnet, dass** die Füllungssteuerungsvorrichtung einen einzigen Kraft- oder Weggeber oder einen Anschluss für einen solchen aufweist, um die Arbeitsmediumströmung in den Ein- und Auslässen (1, 2, 3, 4, 8, 9) und/oder zwischen diesen zu steuern oder zu regeln, und die Füllungssteuerungsvorrichtung die einzige an der hydrodynamischen Maschine angeschlossene Ventilvorrichtung zur Steuerung des Füllungsgrades in dem Arbeitsraum der hydrodynamischen Maschine und insbesondere des Bremsmoments ist.

21. Hydrodynamische Maschine gemäß einem der Ansprüche 19 oder 20,
**dadurch gekennzeichnet, dass** die Füllungssteuerungsvorrichtung mit ihrem zweiten Einlass (2) unmittelbar am Arbeitmediumauslass der hydrodynamischen Maschine angeschlossen ist, und insbesondere mit ihrem ersten Auslass unmittelbar am Arbeitsmediumeinlass angeschlossen ist, insbesondere jeweils frei von einer Zwischenschaltung von Schläuchen, Rohren oder anderen separat vorgesehenen Leitungen.

## Claims

1. A filling control apparatus of a hydrodynamic machine, especially for a retarder;
1.1 comprising a first inlet (1) for feeding working medium for the hydrodynamic machine into the filling control apparatus;
1.2 comprising a second inlet (2) for feeding working medium from the hydrodynamic machine into the filling control apparatus;
1.3 comprising a first outlet (3) for discharging working medium into the hydrodynamic machine;
1.4 comprising a second outlet (4) for discharging working medium from the hydrodynamic machine or working medium from a bypass (10) which guides working medium past the hydrodynamic machine;
1.5 comprising a force or displacement transducer or a connection for the same, with
1.6 all mentioned inlets and outlets (1, 2, 3, 4) being provided together with a force and/or displacement transducer, or the connection for the same, in a common control valve which comprises a first valve body or piston (6) which is activated by the force and/or displacement transducer in such a way that it controls or adjusts at least indirectly the working medium flow in the inlets and outlets (1, 2, 3, 4) and/or between the same depending on the pressurization by the force and/or displacement transducer;
**characterized by** the following features:
1.7 a third inlet (8) is provided for feeding working medium from the bypass (10) into the filling control apparatus and a third outlet (9) for discharging working medium into the bypass, which are connected in such a way with the first valve body or piston (6) that the same will control or adjust the working medium flow in the third inlet (8) and the third outlet (9) and/or between the same depending on the pressurization by the force and/or displacement transducer.

2. A filling control apparatus according to claim 1, **characterized in that** the valve body or piston (6) can be actuated by pressurization by the force and/or displacement transducer in such a way, especially depending on a control pressure, that it controls or adjusts the division of the working medium flow from the first inlet (1) to the bypass (10) and the hydrodynamic machine.

3. A filling control apparatus according to one of the claims 1 or 2,
**characterized in that** a control pressure connection (5) with an adjustable control pressure in the control valve is provided as a displacement transducer for the first valve body or piston (6), and the first valve body or piston (6) is pressurized by the control pressure in such a way that it controls or adjusts the working medium flow in the inlets and outlets (1, 2, 3, 4) and/or between the same at least indirectly depending on the control pressure.

4. A filling control apparatus according to one of the claims 1 to 3,
**characterized in that** the control valve comprises a single valve housing (7), especially consisting of a hollow body (7.1) and two cover elements arranged at the end side, into which open the inlets and outlets (1, 2, 3, 4) and especially the control pressure connection (5) separately from one another.

5. A filling control apparatus according to one of the claims 1 to 4,
**characterized in that** the bypass (10) is formed by the filling control apparatus itself.

6. A filling control apparatus according to one of the claims 1 to 5,
**characterized in that** a second valve body or piston (11) is provided which is displaceable relative to the first valve body or piston (6), especially coaxially or in alignment with the same.

7. A filling control apparatus according to claim 6, **characterized in that** the second piston (11) is held in a sliding manner in the first piston (6) and rests on the first piston (6) especially by way of a spring (13), especially a pressure spring.

8. A filling control apparatus according to one of the claims 6 or 7,
**characterized in that** the first piston (6) comprises a control edge (6.1) which controls the opening cross section of the first outlet (3) especially in combination with the valve housing (7), and the second piston (11) comprises a control edge (11.1) which controls the opening cross section of the second inlet (2) especially in combination with the valve housing (7).

9. A filling control apparatus according to one of the claims 1 to 8,
**characterized in that** the first piston (6) and especially the second piston (11) are pretensioned by a spring (12, 13) each, especially a pressure spring.

10. A filling control apparatus according to claim 9, **characterized in that** the spring (13) which pretensions the second piston (11) has a lower spring force than the spring (12) which pretensions the first piston (6).

11. A filling control apparatus according to one of the claims 6 to 10,
**characterized in that** the first piston (6) controls the opening cross section of the first outlet (3) and the opening cross section of the third inlet (8) especially in combination with the valve housing (7), and the second piston (11) controls the opening cross section of the second inlet (2) especially in combination with the valve housing (7), and the first inlet (1), the second outlet (4) and the third outlet (9) especially have a constant cross section which is always fully opened.

12. A filling control apparatus according to the claims 4 and 6 and especially according to claim 5 or one of the claims 7 to 11, **characterized in that** the filling control apparatus is free from connections conducting the working or control medium with the exception of the mentioned inlets and outlets (1, 2, 3, 4, 8, 9) and especially the control pressure connection (5).

13. A filling control apparatus according to one of the claims 1 to 5,
**characterized in that** the filling control apparatus is free from movable control pistons apart from the two pistons (6, 11).

14. A filling control apparatus according to one of the claims 6 to 13,
**characterized in that** the first piston (6) is pressurized on a first side by the control pressure or the force or displacement transducer and on a second side which is opposite to the first side by the pressure from the second inlet (2) and/or the third inlet (8), with the control pressure or the force or displacement transducer acting especially against the force of the spring (12) which pretensions the first piston (6).

15. A filling control apparatus according to one of the claims 6 to 14,
**characterized in that** the second piston (11) is pressurized on a first side by the pressure in the first outlet (3) and/or in the third outlet (9) and on a second side which is opposite to the first side by the pressure from the second inlet (2) and/or the third inlet (8), with the pressure on the second side acting especially against the force of the spring (13) which pretensions the second piston (11).

16. A filling control apparatus according to one of the claims 1 to 15,
**characterized in that** the piston(s) (6, 11) is/are displaceable in the control valve in the axial direction and the second inlet (2) opens axially into the control valve.

17. A filling control apparatus according to one of the claims 1 to 16,
**characterized in that** a control apparatus is provided for setting the control pressure at the control pressure connection (5) or a force and/or displacement transducer is provided which is arranged in such a way that it gradually increases the control pressure or the correcting variable of the force and/or displacement transducer for opening the control valve in order to guide working medium from the first inlet (1) to the first outlet (3), and gradually reduces the control pressure or correcting variable for closing the control valve in order to stop the conduction of working medium out of the first outlet (3).

18. A filling control apparatus according to claim 17, **characterized in that** the control apparatus or the force and/or displacement transducer has a first operating mode, which is the standard mode, in which the control pressure or the correcting variable is set according to claim 16, and a second operating mode, which is the emergency cut-off mode, in which the control pressure or the correcting variable is cut off or reduced suddenly, especially completely in a direct way.

19. A hydrodynamic machine, especially a retarder, comprising a working medium inlet and a working medium outlet, **characterized in that** the hydrodynamic machine is provided with a filling control apparatus according to one of the claims 1 to 18, and the working medium inlet is connected to the first outlet (3) in a manner conducting the working medium, and the working medium outlet is connected with the outlet (2) in a manner conducting the working medium.

20. A hydrodynamic machine according to claim 19, **characterized in that** the filling control apparatus comprises a single force or displacement transducer or a connection for the same in order to control or adjust the working medium flow in the inlets and outlets (1, 2, 3, 4, 8, 9) and/or between the same, and the filling control apparatus is the only valve apparatus connected to the hydrodynamic machine for controlling the degree of filling in the working chamber of the hydrodynamic machine and especially the braking torque.

21. A hydrodynamic machine according to one of the claims 19 or 20,
**characterized in that** the filling control apparatus is connected with its second inlet (2) directly to the working medium outlet of the hydrodynamic machine, and is connected especially with its first outlet directly to the working medium inlet, especially free from interposing any tubes, pipes or other separately provided lines.

## Revendications

1. Dispositif de contrôle du remplissage d'une machine hydrodynamique, en particulier pour un retardateur,
1.1 avec une première entrée (1) pour amener du fluide de travail pour la machine hydrodynamique dans le dispositif de contrôle du remplissage ;
1.2 avec une deuxième entrée (2) pour amener du fluide de travail hors de la machine hydrodynamique et dans le dispositif de contrôle du remplissage ;
1.3 avec une première sortie (3) pour évacuer du fluide de travail vers la machine hydrodynamique ;
1.4 avec une deuxième sortie (4) pour évacuer du fluide de travail de la machine hydrodynamique ou du fluide de travail hors d'une dérivation (10) acheminant du fluide de travail en contournant la machine hydrodynamique ;
1.5 avec un capteur de force et/ou de distance ou une connexion pour celui-ci,
1.6 toutes les entrées et sorties susmentionnées (1, 2, 3, 4) étant prévues avec le capteur de force et/ou de distance ou avec la connexion pour celui-ci dans une soupape de contrôle commune, qui présente un premier corps de soupape ou piston (6) qui est soumis à l'action du capteur de force et/ou de distance de telle façon qu'il contrôle ou régule l'écoulement du fluide de travail dans les entrées et sorties (1, 2, 3, 4) et/ou entre celles-ci en fonction de l'action du capteur de force et/ou de distance ;
**caractérisé en ce que** :
1.7 il est prévu une troisième entrée (8) pour acheminer du fluide de travail hors de la dérivation (10) dans le dispositif de contrôle du remplissage et une troisième sortie (9) pour évacuer du fluide de travail vers la dérivation (10), qui sont reliées avec le premier corps de soupape ou piston (6) de telle manière que celui-ci contrôle ou régule l'écoulement du fluide de travail dans la troisième entrée (8) et la troisième sortie (9) et/ou entre celles-ci en fonction de l'action du capteur de force et/ou de distance.

2. Dispositif de contrôle du remplissage selon la revendication 1, **caractérisé en ce que** le corps de soupape ou piston (6) peut être actionné sous l'action du capteur de force et/ou de distance, en particulier en fonction d'une pression de contrôle, de telle façon qu'il contrôle ou régule la répartition du flux de fluide de travail provenant de la première entrée (1) vers la dérivation (10) et la machine hydrodynamique.

3. Dispositif de contrôle du remplissage selon l'une des revendications 1 ou 2, **caractérisé en ce que** le capteur de distance pour le premier corps de soupape ou piston (6) est un raccord de pression de contrôle (5) avec une pression de contrôle réglable dans la soupape de contrôle, et le premier corps de soupape ou piston (6) est soumis à la pression de contrôle de telle façon qu'il contrôle ou régule l'écoulement du fluide de travail dans les entrées et sorties (1, 2, 3, 4) et/ou entre celles-ci au moins indirectement en fonction de la pression de contrôle.

4. Dispositif de contrôle du remplissage selon l'une des revendications 1 à 3, **caractérisé en ce que** la soupape de contrôle présente un seul corps de soupape (7), composé en particulier d'un corps creux (7.1) et de deux éléments formant couvercle disposés aux extrémités, dans lequel les entrées et sorties (1, 2, 3, 4) et en particulier le raccord de pression de contrôle (5) débouchent séparément les uns des autres.

5. Dispositif de contrôle du remplissage selon l'une des revendications 1 à 4, **caractérisé en ce que** la dérivation (10) est formée par le dispositif de contrôle du remplissage lui-même.

6. Dispositif de contrôle du remplissage selon l'une des revendications 1 à 5, **caractérisé en ce qu'**il est prévu un deuxième corps de soupape ou piston (11) qui est capable de translation par rapport au premier corps de soupape ou piston (6), en particulier de façon coaxiale ou dans l'alignement de celui-ci.

7. Dispositif de contrôle du remplissage selon la revendication 6, **caractérisé en ce que** le deuxième piston (11) est supporté de façon coulissante dans le premier piston (6) et s'appuie en particulier par l'intermédiaire d'un ressort (13), en particulier un ressort de compression, sur le premier piston (6).

8. Dispositif de contrôle du remplissage selon l'une des revendications 6 ou 7, **caractérisé en ce que** le premier piston (6) présente un bord de contrôle (6.1) qui contrôle la section d'ouverture de la première sortie (3), en particulier en coopération avec le corps de soupape (7) ; et le deuxième piston (11) présente un bord de contrôle (11.1) qui contrôle la section d'ouverture de la deuxième entrée (2), en particulier en coopération avec le corps de soupape (7).

9. Dispositif de contrôle du remplissage selon l'une des revendications 1 à 8, **caractérisé en ce que** le premier piston (6) et en particulier le deuxième piston (11) sont précontraints chacun par un ressort (12, 13), en particulier un ressort de compression.

10. Dispositif de contrôle du remplissage selon la revendication 9, **caractérisé en ce que** le ressort (13) qui précontraint le deuxième piston (11) a une force de ressort inférieure à celle du ressort (12) qui précontraint le premier piston (6).

11. Dispositif de contrôle du remplissage selon l'une des revendications 6 à 10, **caractérisé en ce que** le premier piston (6) contrôle, en particulier en coopération avec le siège de soupape (7), la section d'ouverture de la première sortie (3) et la section d'ouverture de la troisième entrée (8), et le deuxième piston (11) contrôle, en particulier en coopération avec le siège de soupape (7), la section d'ouverture de la deuxième entrée (2), et la première entrée (1), la deuxième sortie (4) et la troisième sortie (9) présentent une section constante, toujours complètement ouverte.

12. Dispositif de contrôle du remplissage selon les revendications 4 et 6 et en particulier la revendication 5 ou l'une des revendications 7 à 11, **caractérisé en ce que** le dispositif de contrôle du remplissage ne comporte, à l'exception des entrées et sorties (1, 2, 3, 4, 8, 9) mentionnées et en particulier du raccord de pression de contrôle (5), aucun raccord acheminant un fluide de travail ou de contrôle

13. Dispositif de contrôle du remplissage selon l'une des revendications 6 à 12, **caractérisé en ce que** le dispositif de contrôle du remplissage ne comporte, à l'exception des deux piston (6, 11), aucun piston de contrôle mobile.

14. Dispositif de contrôle du remplissage selon l'une des revendications 6 à 13, **caractérisé en ce que** le premier piston (6) est soumis sur un premier côté à la pression de contrôle ou à l'action du capteur de force ou de distance, et sur un deuxième côté opposé au premier côté, à la pression provenant de la deuxième entrée (2) et/ou de la troisième entrée (8), la pression de contrôle ou le capteur de force ou de distance agissant en particulier contre la force du ressort (12) qui précontraint le premier piston (6).

15. Dispositif de contrôle du remplissage selon l'une des revendications 6 à 14, **caractérisé en ce que** le deuxième piston (11) est soumis sur un premier côté à la pression de la première sortie (3) et/ou de la troisième sortie (9), et sur un deuxième côté opposé au premier côté, à la pression provenant de la deuxième entrée (2) et/ou de la troisième entrée (8), la pression sur le deuxième côté agissant en particulier contre la force du ressort (13), qui précontraint le deuxième piston (11).

16. Dispositif de contrôle du remplissage selon l'une des revendications 1 à 15, **caractérisé en ce que** le ou les pistons (6, 11) sont mobiles dans le sens axial dans la soupape de contrôle, et la deuxième entrée (2) débouche dans le sens axial dans la soupape de contrôle.

17. Dispositif de contrôle du remplissage selon l'une des revendications 1 à 16, **caractérisé en ce qu'**il est prévu un dispositif de contrôle prévu pour régler la pression de contrôle au niveau du raccord de pression de contrôle (5) ou un capteur de force et/ou de distance qui est équipé de telle façon que pour ouvrir la soupape de contrôle afin d'amener du fluide de travail de la première entrée (1) vers la première sortie (3), il augmente graduellement la pression de contrôle ou la grandeur de réglage du capteur de force et/ou de distance, et pour fermer la soupape de contrôle afin de fermer la conduite de fluide de travail à partir de la première sortie (3), il réduit graduellement la pression de contrôle ou la grandeur de réglage.

18. Dispositif de contrôle du remplissage selon la revendication 17, **caractérisé en ce que** le dispositif de contrôle ou le capteur de force et/ou de distance présente un premier mode de fonctionnement, le mode standard, dans lequel la pression de contrôle ou la grandeur de réglage est réglée selon la revendication 16, un deuxième mode de fonctionnement ou mode d'arrêt d'urgence, dans lequel la pression de contrôle est coupée ou réduite brusquement, en particulier tout de suite et complètement.

19. Machine hydrodynamique, en particulier retardateur, avec une entrée de fluide de travail et une sortie de fluide de travail, **caractérisée en ce que** la machine hydrodynamique est équipée d'un dispositif de contrôle du remplissage selon l'une des revendications 1 à 18, et l'entrée de fluide de travail est reliée de façon à acheminer le fluide de travail avec la première sortie (3) et la sortie de fluide de travail est reliée de façon à acheminer le fluide de travail avec la deuxième entrée (2).

20. Machine hydrodynamique selon la revendication 19, **caractérisée en ce que** le dispositif de contrôle du remplissage présente un seul capteur de force ou de distance ou une connexion pour celui-ci afin de contrôler ou de réguler l'écoulement du fluide de travail dans les entrées et les sorties (1, 2, 3, 4, 8, 9) et/ou entre celles-ci, et le dispositif de contrôle du remplissage est le seul dispositif de soupapes relié à la machine hydrodynamique pour la contrôle du remplissage de l'espace de travail de la machine hydrodynamique et en particulier du couple de freinage.

21. Machine hydrodynamique selon l'une des revendications 19 ou 20, **caractérisée en ce que** le dispositif de contrôle du remplissage est raccordé directement par sa deuxième entrée (2) à l'entrée de fluide de travail de la machine hydrodynamique, et en particulier relié directement par sa première sortie à l'entrée de fluide de travail, en particulier sans intercaler de flexibles, tuyaux ou autres conduites prévues séparément.
